# EUROPEAN PATENT APPLICATION

(11) **EP 3 690 618 A1**
(43) Date of publication of application: **05.08.2020**
(21) Application number: 18878326.0
(22) Date of filing: 24.10.2018
(51) Int. Cl.: G06F 3/041

(54) **METHOD AND DEVICE FOR IDENTIFYING TOUCH OPERATION, AND COMPUTER-READABLE STORAGE MEDIUM**

(30) Priority: 15.11.2017 CN 201711127114
(71) Applicant: Shanghai Zhonglian Technologies Ltd., Co, Shanghai 201419 (CN)
(72) Inventor: ZHONG, Guanghua, Jiangxi 330008 (CN)
(74) Representative: Ridderbusch, Oliver
(86) International application number: PCT/CN2018/111754
(87) International publication number: WO 2019/095955

(57) **Abstract**

The invention provides a method and apparatus for identifying touch operation, and computer-readable storage medium. The method for identifying the touch operation comprises the following steps of S101: controlling all scanning channels of a capacitive touch screen to be in an active state; S102: determining whether the capacitive touch screen receives a touch operation; and S103: when the capacitive touch screen receives the touch operation, scanning all the scanning channels one by one, and acquiring position information of the scanning channel corresponding to the touch operation. After the technical solution above is implemented, a delay for touch operation identification can be effectively reduced and an identification efficiency of the touch operation can be improved; and hardware devices are unnecessary to be changed, so that the cost is low.

## Description

### Technical Field

The present invention relates to the field of touch screen identification, and more particularly, to a method and apparatus for identifying touch operation, and computer-readable storage medium.

### Background Art

With the popularization of intelligent terminals such as a smartphone, a tablet computer and the like, the intelligent terminals are generally installed with a touch screen, and a user realizes information interaction with the intelligent terminal by performing a touch operation on the touch screen. The touch screen can be divided into a resistive touch screen and a capacitive touch screen according to a working principle thereof, wherein the capacitive touch screen has become a mainstream choice in the current industry due to better touch experience and a longer service life.

A touch operation identification principle of the capacitive touch screen in the prior art is to divide the capacitive touch screen into a plurality of row scanning channels and column scanning channels, and each row scanning channel and each column scanning channel have preset number and position. When the touch operation exists, an electric signal of the scanning channel at a touch position can be changed, and the row scanning channels and the column scanning channels are respectively scanned one by one, which means that the row scanning channel and the column scanning channel where the touch operation is performed can be identified, thus acquiring a position of the touch operation. The scanning operation for the scanning channel is executed according to a scanning period in the prior art, and the first scanning channel to the last scanning channel are scanned one by one in one scanning period. After all the scanning channels are completely scanned in one scanning period, the electric signal caused by the touch operation is converted into a digital signal and uploaded to a processor of a next higher level. Processing and reporting time of data is very short in one scanning period, and most of the time is used for executing the scanning operation on all the scanning channels. A mode of scanning from channels at both ends of the screen to a channel at the middle or a mode of scanning from the channel at the middle to the channels at both ends respectively is adopted as a mode of scanning the capacitive touch screen by some intelligent terminal devices, and the scanning period in these cases is a time required to scan half of the channels.

However, there is still a problem of a delay of touch operation identification in the prior art, for example, a certain capacitive touch screen has nine column scanning channels, a 1^{st} column scanning channel to a 9^{th} column scanning channel are scanned one by one in one scanning period, the scanning period is about 8 milliseconds, and one column scanning channel can be scanned for about 1 millisecond. However, a time and a position of the touch operation performed by the user are random, if the user performs the touch operation at a position of a 3^{rd} column scanning channel at a 4^{th} millisecond, the 3^{rd} column scanning channel is just completely scanned at this time, the touch operation can only be identified until the next scanning period, the 3^{rd} column scanning channel is scanned at an 11^{th} millisecond approximately, waiting for 7 milliseconds, and a delay time is about one scanning period. If the user performs the touch operation at other moments or other positions, a certain delay can also be generated, and for an application with a higher real-time interactive requirement, such as a game, the user can feel the lagging, thus reducing user experience.

Therefore, how to reduce a time for identifying the touch operation received by the capacitive touch screen and improve an efficiency of touch operation identification is a technical problem to be solved.

### Summary of the Invention

In order to overcome the defects in the prior art, the present invention is intended to provide a method and apparatus for identifying touch operation, and computer-readable storage medium, whether the touch operation exists is determined by activating all scanning channels firstly, and then the scanning channels are scanned one by one, thus realizing a technical effect of reducing a delay of touch operation identification.

The present invention discloses a method for identifying touch operation, which comprises the following steps of:
S101: controlling all scanning channels of a capacitive touch screen to be in an active state;
S102: determining whether the capacitive touch screen receives a touch operation; and
S103: when the capacitive touch screen receives the touch operation, scanning all the scanning channels one by one, and acquiring position information of the scanning channel corresponding to the touch operation.

Preferably, the scanning channels include a row scanning channel and a column scanning channel.

Preferably, when executing the step S101, switches of all the row scanning channels or all the column scanning channels are turned on.

Preferably, the step S103 comprises the following steps of:
S103-1: controlling one column scanning channel to be in the active state and the other column scanning channels to be in an inactive state;
S103-2: detecting electric signals of all the row scanning channels; and
S103-3: repeating the step S103-1 and the step S103-2 until all the column scanning channels are completely scanned to acquire position information of the touch operation.

Preferably, the method comprises repeating the step S101, the step S102 and the step S103 to continuously identify the touch operation.

The present invention further discloses an apparatus for identifying touch operation, which includes:
a control module configured to control all scanning channels of a capacitive touch screen to be in an active state;
a determination module connected with the control module and configured to determine whether the capacitive touch screen receives a touch operation; and
a position information acquisition module connected with the determination module and configured to, when determining by the determination module that the capacitive touch screen receives the touch operation, scan all the scanning channels one by one and acquire position information of the scanning channel corresponding to the touch operation.

Preferably, the scanning channels include a row scanning channel and a column scanning channel.

Preferably, when the control module controls all the scanning channels of the capacitive touch screen to be in the active state, switches of all the row scanning channels or all the column scanning channels are turned on.

Preferably, the position information acquisition module includes:
a column scanning channel activation unit configured to control one column scanning channel to be in the active state and the other column scanning channels to be in an inactive state;
a row scanning channel determination unit configured to detect electric signals of all the row scanning channels; and
a position information acquisition unit connected with the column scanning channel activation unit and the row scanning channel determination unit and configured to acquire electric signals acquired by repeated working of the column scanning channel activation unit and the row scanning channel determination unit until all the column scanning channels are completely scanned to acquire position information of the touch operation.

Preferably, the control module, the determination module and the position information acquisition module work repeatedly to continuously identify the touch operation.

The present invention further discloses a computer-readable storage medium with a computer program stored thereon, wherein when being executed by a processor, the computer program implements the following steps of:
S104: controlling all scanning channels of a capacitive touch screen to be in an active state;
S105: determining whether the capacitive touch screen receives a touch operation; and
S106: when the capacitive touch screen receives the touch operation, scanning all the scanning channels one by one, and acquiring position information of the scanning channel corresponding to the touch operation.

Preferably, the scanning channels include a row scanning channel and a column scanning channel.

Preferably, when executing the step S104, switches of all the row scanning channels or all the column scanning channels are turned on.

Preferably, the step S106 comprises the following steps of:
S106-1: controlling one column scanning channel to be in the active state and the other column scanning channels to be in an inactive state;
S106-2: detecting electric signals of all the row scanning channels; and
S106-3: repeating the steps S106-1 and S106-2 until all the column scanning channels are completely scanned to acquire position information of the touch operation.

Preferably, the computer readable storage medium includes repeating the step S104, the step S105 and the step S106 to continuously identify the touch operation.

The present invention has the following beneficial effects compared with the prior art after adopting the technical solutions above:
1. the delay of touch operation identification is effectively reduced and the efficiency of touch operation identification is improved; and
2. a hardware device does not need to be changed, thus having low costs.

### Brief Description of the Drawings

Fig. 1 is a flow chart complying with a method for identifying touch operation according to a preferred embodiment of the present invention;
Fig. 2 is a flow chart of the step S103 in Fig. 1;
Fig. 3 is a structure block diagram complying with an apparatus for identifying touch operation according to a preferred embodiment of the present invention;
Fig. 4 is a structure block diagram of a position information acquisition module in Fig. 3;
Fig. 5 is a flow chart complying with a computer program in a computer-readable storage medium according to a preferred embodiment of the present invention;
Fig. 6 is a flow chart of the step S106 in Fig. 5;
Fig. 7 is a structure diagram complying with the scanning channel according to a preferred embodiment of the present invention; and
Fig. 8 is a time sequence diagram complying with the method for identifying the touch operation according to a preferred embodiment of the present invention.

### Reference numerals:

10 refers to apparatus for identifying touch operation, 11 refers to control module, 12 refers to determination module, 13 refers to position information acquisition module, 131 refers to column scanning channel activation unit, 132 refers to row scanning channel determination unit, and 133 refers to position information acquisition unit.

### Detailed Description of the Preferred Embodiments

The advantages of the present invention are further described hereinafter with reference to the drawings and the specific embodiments.

The exemplary embodiments are described in detail herein, and are illustratively shown in the drawings. When the following description refers to the drawings, unless otherwise indicated, the same numbers in different drawings indicate the same or similar elements. The embodiments described in the following exemplary embodiments do not represent all embodiments consistent with the present disclosure. On the contrary, they are merely examples of devices and methods consistent with some aspects of the present disclosure described in detail in the appended claims.

The terms used in the present disclosure are for the purpose of describing particular embodiments only and are not intended to limit the present disclosure. The singular forms of "a", "said" and "the" used in the present disclosure and the appended claims are also intended to include the plural forms, unless other meanings are clearly indicated by the context. It should also be understood that the term "and/or" used herein refers to and includes any or all possible combinations of one or more associated listed items.

It shall be understood that although the terms first, second, third, etc. may be used to describe various information in the present disclosure, the information should not be limited to these terms. These terms are only used to distinguish the information of the same type from each other. For example, the first information can also be referred to as the second information, and similarly, the second information can also be referred to as the first information without departing from the scope of the present disclosure. Depending on the context, the word "if" used herein can be explained as "in the case of", "when" or "in response to determine".

In the description of the present invention, it should be understood that the orientation or position relation indicated by the terms "longitudinal", "lateral", "upper", "lower", "front", "rear", "left", "right", "vertical", "horizontal", "top", "bottom", "inside", "outside" and the like is based on the orientation or position relation shown in the drawings, which is only used for convenience of description of the present invention and simplification of description instead of indicating or implying that the indicated device or element must have a specific orientation, and be constructed and operated in a specific orientation, and thus should not be understood as a limitation to the present invention.

In the description of the present invention, the terms "installation", "connected" and "connection" should be understood in broad sense unless otherwise specified and defined. For example, they can be mechanical connection or electrical connection, can also be connected inside two components, can be directly connected, and can also be indirectly connected through an intermediate medium. The specific meanings of the above terms can be understood in a specific case by those of ordinary skills in the art.

In the following description, the postfixes such as "module", "component" or "unit" used to indicate elements are only used to facilitate the description of the present invention and have no specific meanings in themselves. Therefore, the "module" and "component" can be used in a mixed way.

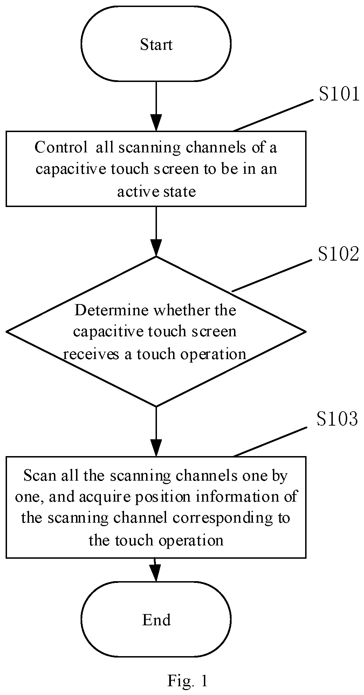

With reference to Fig. 1 which is a flow chart complying with a method for identifying touch operation according to a preferred embodiment of the present invention, the method for identifying the touch operation comprises the following steps.

In S101, controlling all scanning channels of a capacitive touch screen to be in an active state.

The method is applicable to the touch screen, especially the capacitive touch screen. The capacitive touch screen is a four-layer composite glass screen, an interlayer of the glass screen is coated with two layers of ITO, the ITO is an abbreviation of indium tin oxide, and the ITO coatings on the interlayer are used as working surfaces to induce a capacitance change caused by a touch operation of a human body.

In the prior art, different ITO conductive circuits are etched on the two ITO coatings, patterns etched on the two ITO coatings are perpendicular to each other, wherein one pattern is in a horizontal direction and the other pattern is in a vertical direction, and the patterns can be regarded as scanning channels in row and column directions. Since the row scanning channels and the column scanning channels are located on different surfaces, a capacitance node is formed at an intersection thereof. The capacitive touch screen is provided with a plurality of capacitance nodes, so that a certain capacitance node can be covered when the touch operation is received at any position. The scanning channel in one direction can be used as a driving circuit, and the scanning channel in the other direction can be used as a detecting circuit. When a current passes through one scanning channel in the driving circuit, if a signal of a capacitance change from outside exists, a change of the capacitance node on the scanning channel on the other layer is caused. A change of a capacitance value detected can be measured by the detecting circuit connected with the scanning channel, and then converted into a digital signal by an analog-to-digital converter, and operation processing is performed on the digital signal by a processor to acquire a position of the touch operation. In the prior art, the row scanning channels or the column scanning channels are scanned one by one according to a fixed scanning period to acquire position information of the touch operation, and each scanning period is connected with each other and repeated.

In the present invention, the repeated scanning mode in the prior art is abandoned, all the scanning channels of the capacitive touch screen are controlled to be in the active state in the step, for example, all the driving circuits are supplied with the current, and all the detecting circuits are in an on state, and in the state, regardless of the touch operation received at any position on the capacitive touch screen, a change of an electric signal on the detecting circuit can be caused, so that the processor acquires occurrence of the touch operation at the first time.

In S102, determining whether the capacitive touch screen receives a touch operation.

A determination operation is executed in the step, which means that whether the capacitive touch screen receives the touch operation is determined. Since all the scanning channels have been in the active state in the step S101, which is namely a working state, if the touch operation is received at any position on the capacitive touch screen, the change of the electric signal can be caused, and a signal value acquired after digital-to-analog conversion is identified by a processor. The processor is prestored with a signal value range when no touch operation exists and a signal value range when the touch operation exists, and determines whether the detected signal value is within the signal value range above, so as to know whether the touch operation exists. The step can only determine whether the capacitive touch screen receives the touch operation, and cannot determine a specific position of the touch operation.

In S103, when the capacitive touch screen receives the touch operation, scanning all the scanning channels one by one, and acquiring position information of the scanning channel corresponding to the touch operation.

When the determination in the step S102 is correct, which means that when the capacitive touch screen receives the touch operation, the step is executed. In the step, all the scanning channels are scanned one by one, which means that each scanning channel (which is namely the driving circuit) in one direction is supplied with the current in different time periods respectively to make the scanning channel in the active state. Electric signal detection is performed on the scanning channel (which is namely the detecting circuit) in the other direction until all the driving circuits are respectively in the active state once, thus acquiring the position of the touch operation. The step is different from the step S101 in that only one scanning channel is in the active state at the same moment in the step, and a duration for completely scanning all the scanning channels is approximately equal to one scanning period in the prior art.

As a further improvement to the method for identifying the operation, the scanning channels include a row scanning channel and a column scanning channel. In the improved embodiment, the scanning channels are divided into two types according to circuit directions, which are namely the row scanning channel in a horizontal direction and the column scanning channel in a vertical direction, and when one of the scanning channels is used as the driving circuit for working, the other scanning channel is used as the detecting circuit for working.

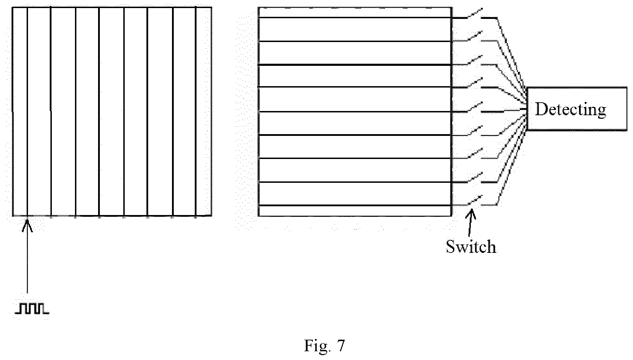

As a further improvement to the method for identifying the operation, when executing the step S101, switches of all the row scanning channels or all the column scanning channels are turned on. With reference to Fig. 7, the column scanning channels are shown on the left side in the figure, and are used as the driving circuits for working, and it can be seen from the figure that a signal is inputted to the first column scanning channel on the left side. The row scanning channels are shown on the right side in the figure, and are used as the detecting circuits for working, and each row scanning channel is provided with the switch. In fact, the column scanning channels and the row scanning channels are overlapped spatially. When the step S101 is executed, all the column scanning channels have current signals, and all the switches are turned on, which means that all the scanning channels are in the active state, so that regardless of the touch operation received at any position on the capacitive touch screen, the change of the electric signal can be caused on the capacitance node formed by intersection of the row scanning channel and the column scanning channel, so as to be detected by the detecting circuit. The column scanning channels can also be provided with the switches, so as to control working states of different column scanning channels.

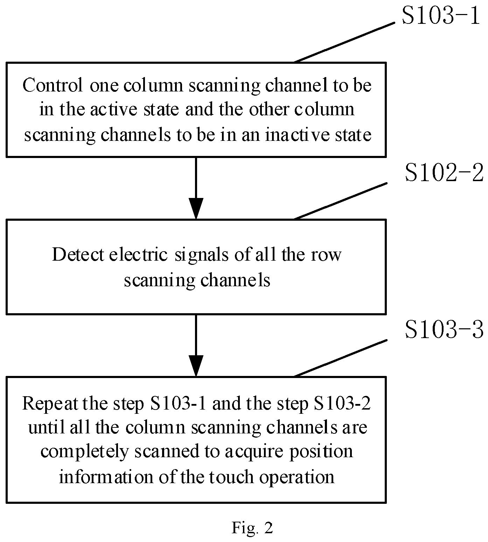

With reference to Fig. 2 which is a flow chart of the step S103 in Fig. 1, the step S103 comprises the following steps.

In S103-1, one column scanning channel is controlled to be in the active state and the other column scanning channels are controlled to be in an inactive state.

In the embodiment, the column scanning channels are used as the driving circuits for working, and the row scanning channels are used as the detecting circuits for working. In the step, only one row scanning channel is controlled to be in the active state, which is namely a state with the current passing through; and the other column scanning channels are in the inactive state, which may be a grounded state. In the case, if an electric signal that the touch operation exists is acquired in the subsequent determination step, the position of the touch operation is within a range of the column scanning channels in the active state.

In S103-2, electric signals of all the row scanning channels are detected.

Based on the step S103-1, the step is executed, which means that the electric signals of all the row scanning channels are detected. When the electric signals of the row scanning channels are detected in the step, a separate sampling mode is still adopted, which means that the switch of one row scanning channel is turned on firstly, the switches of the other row scanning channels are turned off, the electric signal of the turned-on row scanning channel is acquired, then an on-off state is switched, the switch of the another row scanning channel is turned on, the electric signal is continuously acquired, and so on, until the electric signals of all the row scanning channels are completely detected. It shall be noted that the step is only executed for the active column scanning channel in the step S103-1, if the electric signal of one of the row scanning channels reflects that the touch operation exists, the row scanning channel and the active column scanning channel in the step S103-1 jointly determine the position of the touch operation.

In S103-3, the step S103-1 and the step S103-2 are repeated until all the column scanning channels are completely scanned to acquire position information of the touch operation.

The step S103-1 and the step S103-2 are executed once, only the scanning operation for one column scanning channel is completed, and the step S103-1 and the step S103-2 also need to be executed on the other column scanning channels respectively, until all the column scanning channels are completely scanned, so that a process of touch operation identification for the entire capacitive touch screen can be realized. If all the column scanning channels are completely scanned, the electric signals of all the capacitance nodes can be acquired, thus acquiring the position information of the touch operation.

As a further improvement to the method for identifying the operation, the step S 101, the step S102 and the step S103 are repeated to continuously identify the touch operation. Since the user's touch operation is random and unpredictable, the step S101, the step S102 and the step S103 executed once only cannot meet a requirement of long-term touch operation identification, so that the step S101, the step S102 and the step S103 shall be repeatedly executed to remain a state of touch operation identification. Whether the user performs continuous touch operations or intermittent touch operations, the touch operations can be identified and responded in time.

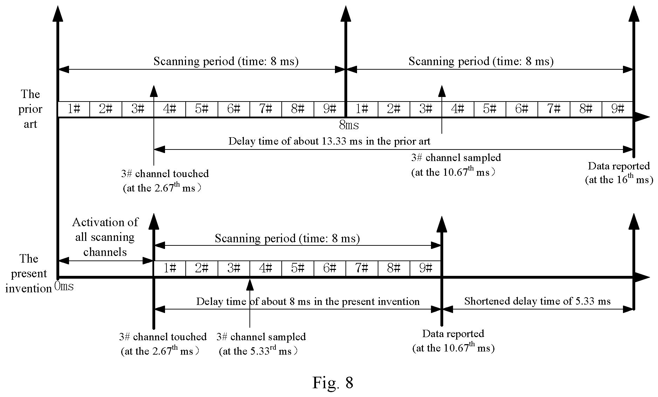

With reference to Fig. 8 which is a time sequence diagram complying with the method for identifying the touch operation according to a preferred embodiment of the present invention, time sequences of touch operation identification in the prior art and the present invention are shown on a same time axis. The time sequence in the prior art is shown in an upper half portion, the time sequence in the present invention is shown in a lower half portion, a horizontal axis is the time axis, and nine driving scanning channels of the capacitive touch screen are provided.

The scanning period in the prior art is 8 milliseconds in a scanning mode of scanning all the scanning channels one by one according to a sequence, which is to scan the scanning channels according to a sequence from a 1# channel to a 9# channel. Each scanning period is repeated, and a working pace thereof is fixed. In the figure, assuming that a 3# scanning channel is just completely scanned, the touch operation occurs in an area of the 3# scanning channel, and a moment at this time is a 2.67^{th} millisecond (which is namely 3/9 of 8 milliseconds), since scanning for the 3# channel in the scanning period has been missed, the touch operation can only be identified until the next scanning period. The channel 3# is completely scanned at a 10.67^{th} millisecond in the second scanning period, and position data of the touch operation can only be reported when the second scanning period is ended, which means that the data is completely reported at a 16^{th} millisecond. From occurrence of the touch operation to data reporting, a delay time is 13.33 milliseconds.

In the present invention, the touch operation in the area of the 3# scanning channel still occurs at the moment of the 2.67^{th} millisecond, and before that, all the scanning channels are in the active state, which is namely the state in the step S101. When the touch operation occurs, the touch operation can be quickly identified in the step S102, then the step S103 is executed, and a working mode of scanning all the scanning channels one by one is implemented, which is namely the scanning period corresponding to the present invention in Fig. 8. The data reporting is completed at a moment of a 10.67^{th} millisecond, and a delay time in the present invention is 8 milliseconds, which is 5.33 milliseconds shorter than that in the prior art.

Due to a randomness of the user's touch operation, the position thereof may be any position on the capacitive touch screen. In the prior art, even if the touch operation occurs at the position of the 9# scanning channel, if the scanning for the touch operation is just missed, a time from the missed scanning to the data reporting is one scanning period; and if the touch operation occurs at the position of the 1# scanning channel, and the scanning operation for the 1# scanning channel is just missed, a delay time thereof can reach two scanning periods. That is to say, the delay time in the prior art is between one scanning period and two scanning periods, and a mathematical expectation thereof is 1.5 scanning periods. However, in the present invention, once the touch operation is detected, scanning for each scanning channel can be started, and the delay time from the scanning to the data reporting is always one scanning period. To sum up, compared with the prior art, the present invention can save the delay time of one scanning period in the best case, the delay time in the worst case is equal to the delay time in the prior art, and the delay time of 0.5 scanning period can be generally saved from a mathematical expectation angle. In addition, the method of the present invention can keep the delay of the touch operation stable, and feedback of operation experience to the user is relatively stable.

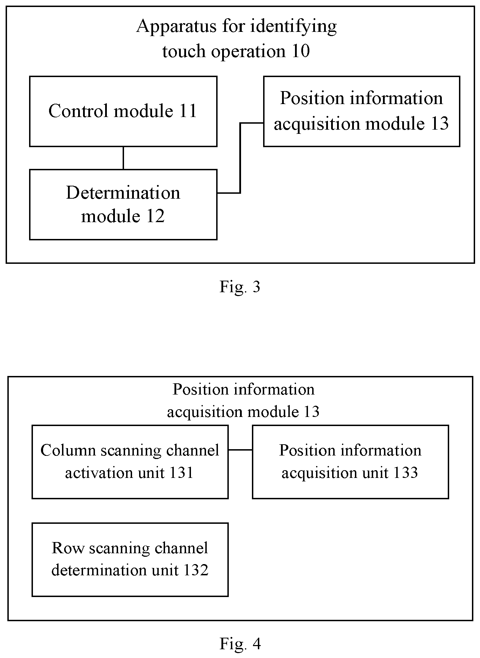

With reference to Fig. 3 which is a structure block diagram complying with an apparatus for identifying touch operation 10 according to a preferred embodiment of the present invention, the apparatus for identifying the touch operation 10 comprises the following modules.

### - Control module 11

The control module 11 controls all scanning channels of a capacitive touch screen to be in an active state. The scanning channels of the capacitive touch screen are divided into a row scanning channel and a column scanning channel, one of the scanning channels needs to be supplied with a current during working, which is namely a driving circuit, and detection is performed on the other scanning channel, which is namely a detecting circuit. The active state refers to that the driving circuit is in a state of having the current, and the detecting circuit is in a state of detecting. The control module 11 controls all the driving circuits to have the currents, and all the detecting circuits are in an on state. In the state, regardless of the touch operation received at any position on the capacitive touch screen, a change of an electric signal on the detecting circuit can be caused, so that a processor acquires occurrence of the touch operation at the first time. The control module 11 may include components such as a driving circuit, a detecting circuit, a switch, etc., which are connected with all the scanning channels.

### - Determination module 12

The determination module 12 is connected with the control module 11 and determines whether the capacitive touch screen receives a touch operation. The determination module 12 may include an analog-to-digital conversion circuit and a logic determination module arranged in the processor, is connected with the detecting circuit in the control module 11, and acquires the detected electric signal and converts the electric signal into a digital signal, and then the processor determines whether the digital signal is within a value range of a signal that the touch operation exists.

### - Position information acquisition module 13

The position information acquisition module 13 is connected with the determination module 12 and, when determining by the determination module 12 that the capacitive touch screen receives the touch operation, scans all the scanning channels one by one and acquires position information of the scanning channel corresponding to the touch operation. The position information acquisition module 13 acquires a determination result from the determination module 12, and when the capacitive touch screen receives the touch operation, all the scanning channels are scanned one by one, which means that each scanning channel (which is namely the driving circuit) in one direction is supplied with the current in different time periods respectively to make the scanning channel in the active state. Electric signal detection is performed on the scanning channel (which is namely the detecting circuit) in the other direction until all the driving circuits are respectively in the active state once, thus acquiring the position of the touch operation.

As a further improvement to the apparatus for identifying the touch operation 10, the scanning channels include a row scanning channel and a column scanning channel. The scanning channels are divided into two types according to circuit directions, which are namely the row scanning channel in a horizontal direction and the column scanning channel in a vertical direction, and when one of the scanning channels is used as the driving circuit for working, the other scanning channel is used as the detecting circuit for working.

As a further improvement to the apparatus for identifying the touch operation 10, when the control module 11 controls all the scanning channels of the capacitive touch screen to be in the active state, switches of all the row scanning channels or all the column scanning channels are turned on. In the embodiment, the control module 11 controls whether all the channels are in the active state by controlling the switches connected in series with all the row scanning channels or all the column scanning channels.

With reference to Fig. 4 which is a structure block diagram of a position information acquisition module 13 in Fig. 3, the position information acquisition module comprises the following units.

### - Column scanning channel activation unit 131

The column scanning channel activation unit 131 controls one column scanning channel to be in the active state and the other column scanning channels to be in an inactive state. In the embodiment, the column scanning channel is used as the driving circuit for working, and the row scanning channel is used as the detecting circuit for working. The column scanning channel activation unit 131 controls only one column scanning channel to be in the active state, which is namely a state with the current passing through; and the other column scanning channels are in the inactive state, which may be a grounded state.

### - Row scanning channel determination unit 132

The row scanning channel determination unit 132 detects electric signals of all the row scanning channels. When the column scanning channel activation unit 131 controls one column scanning channel to be in the active state, the row scanning channel determination unit 132 detects the electric signals of all the row scanning channels. When the row scanning channel determination unit 132 detects the electric signals of the row scanning channels, a separate sampling mode is adopted, which means that the switch of one row scanning channel is turned on, the switches of the other row scanning channels are turned off, the electric signal of the turned-on row scanning channel is acquired, then an on-off state is switched, the switch of the another row scanning channel is turned on, the electric signal is continuously acquired, and so on, until the electric signals of all the row scanning channels are completely detected.

### - Position information acquisition unit 133

The position information acquisition unit 133 is connected with the column scanning channel activation unit 131 and the row scanning channel determination unit 132 and acquires electric signals acquired by repeated working of the column scanning channel activation unit 131 and the row scanning channel determination unit 132 until all the column scanning channels are completely scanned to acquire position information of the touch operation.

As a further improvement to the apparatus for identifying the touch operation 10, the control module 11, the determination module 12 and the position information acquisition module 13 work repeatedly to continuously identify the touch operation. Since the user's touch operation is random and unpredictable, the task executed by the module above once only cannot meet a requirement of long-term touch operation identification, so that the module above shall work repeatedly to remain a state of touch operation identification.

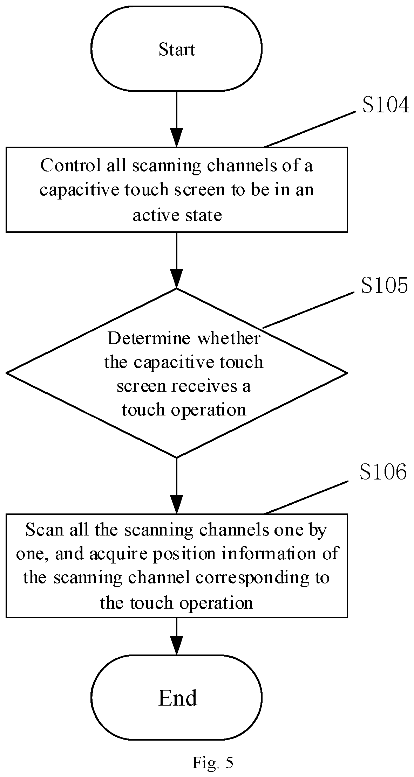

With reference to Fig. 5 which is a flow chart complying with a computer program in a computer-readable storage medium according to a preferred embodiment of the present invention, when being executed by a processor, the computer program implements the following steps of:
S104: controlling all scanning channels of a capacitive touch screen to be in an active state;
S105: determining whether the capacitive touch screen receives a touch operation; and
S106: when the capacitive touch screen receives the touch operation, scanning all the scanning channels one by one, and acquiring position information of the scanning channel corresponding to the touch operation.

As a further improvement to the computer program, the scanning channels include a row scanning channel and a column scanning channel.

As a further improvement to the computer program, when executing the step S104, switches of all the row scanning channels or all the column scanning channels are turned on.

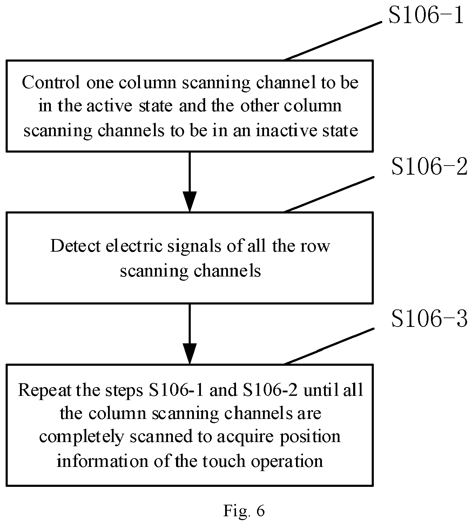

With reference to Fig. 6 which is a flow chart of the step S106 in Fig. 5, the step S106 comprises the following steps of:
S106-1: controlling one column scanning channel to be in the active state and the other column scanning channels to be in an inactive state;
S106-2: detecting electric signals of all the row scanning channels; and
S106-3: repeating the step S106-1 and the step S106-2 until all the column scanning channels are completely scanned to acquire position information of the touch operation.

As a further improvement to the computer program, the step S104, the step S105 and the step S106 are repeated to continuously identify the touch operation.

It should be noted that the embodiments of the present invention have a better implementation performance and are not intended to limit the present invention in any form. Those skilled in the art may change or decorate the technical contents disclosed above into equivalent effective embodiments. Any modification or equivalent change and decoration to the embodiments above according to the technical essence of the present invention without departing from the contents of the technical solutions of the present invention should still fall within the scope of the technical solutions of the present invention.

## Claims

1. A method for identifying touch operation, comprising the following steps of:
S101: controlling all scanning channels of a capacitive touch screen to be in an active state;
S102: determining whether the capacitive touch screen receives a touch operation; and
S103: when the capacitive touch screen receives the touch operation, scanning all the scanning channels one by one, and acquiring position information of the scanning channel corresponding to the touch operation.

2. The method for identifying the touch operation according to claim 1, wherein:
the scanning channels comprise a row scanning channel and a column scanning channel.

3. The method for identifying the touch operation according to claim 2, wherein:
when executing the step S101, switches of all the row scanning channels or all the column scanning channels are turned on.

4. The method for identifying the touch operation according to claim 2 or 3, wherein:
the step S103 comprises the following steps of:
S103-1: controlling one column scanning channel to be in the active state and the other column scanning channels to be in an inactive state;
S103-2: detecting electric signals of all the row scanning channels; and
S103-3: repeating the step S103-1 and the step S103-2 until all the column scanning channels are completely scanned to acquire position information of the touch operation.

5. The method for identifying the touch operation according to claim 1 or 2, comprising:
repeating the step S101, the step S102 and the step S103 to continuously identify the touch operation.

6. An apparatus for identifying touch operation, comprising:
a control module configured to control all scanning channels of a capacitive touch screen to be in an active state;
a determination module connected with the control module and configured to determine whether the capacitive touch screen receives a touch operation; and
a position information acquisition module connected with the determination module and configured to, when determining by the determination module that the capacitive touch screen receives the touch operation, scan all the scanning channels one by one and acquire position information of the scanning channel corresponding to the touch operation.

7. The apparatus for identifying the touch operation according to claim 6, wherein:
the scanning channels comprise a row scanning channel and a column scanning channel.

8. The apparatus for identifying the touch operation according to claim 7, wherein:
when the control module controls all the scanning channels of the capacitive touch screen to be in the active state, switches of all the row scanning channels or all the column scanning channels are turned on.

9. The apparatus for identifying the touch operation according to claim 7 or 8, wherein:
the position information acquisition module comprises:
a column scanning channel activation unit configured to control one column scanning channel to be in the active state and the other column scanning channels to be in an inactive state;
a row scanning channel determination unit configured to detect electric signals of all the row scanning channels; and
a position information acquisition unit connected with the column scanning channel activation unit and the row scanning channel determination unit and configured to acquire electric signals acquired by repeated working of the column scanning channel activation unit and the row scanning channel determination unit until all the column scanning channels are completely scanned to acquire position information of the touch operation.

10. The apparatus for identifying the touch operation according to claim 6 or 7, wherein:
the control module, the determination module and the position information acquisition module work repeatedly to continuously identify the touch operation.

11. A computer-readable storage medium with a computer program stored thereon, wherein when being executed by a processor, the computer program implements the following steps of:
S104: controlling all scanning channels of a capacitive touch screen to be in an active state;
S105: determining whether the capacitive touch screen receives a touch operation; and
S106: when the capacitive touch screen receives the touch operation, scanning all the scanning channels one by one, and acquiring position information of the scanning channel corresponding to the touch operation.

12. The computer-readable storage medium according to claim 11, wherein:
the scanning channels comprise a row scanning channel and a column scanning channel.

13. The computer-readable storage medium according to claim 12, wherein:
when executing the step S104, switches of all the row scanning channels or all the column scanning channels are turned on.

14. The computer-readable storage medium according to claim 12 or 13, wherein:
the step S106 comprises the following steps of:
S106-1: controlling one column scanning channel to be in the active state and the other column scanning channels to be in an inactive state;
S106-2: detecting electric signals of all the row scanning channels; and
S106-3: repeating the steps S106-1 and S106-2 until all the column scanning channels are completely scanned to acquire position information of the touch operation.

15. The computer-readable storage medium according to claim 11 or 12, comprising:
repeating the step S104, the step S105 and the step S106 to continuously identify the touch operation.
